# EUROPÄISCHE PATENTSCHRIFT

(11) **EP 1 153 226 B1**
(45) Veröffentlichungstag und Bekanntmachung des Hinweises auf die Patenterteilung: **03.09.2003**
(21) Anmeldenummer: 00909217.2
(22) Anmeldetag: 18.02.2000
(51) Int. Cl.: F16D 65/097, F16D 65/16

(54) **BREMSBELAG MIT EINER HALTEFEDERANORDNUNG**
BRAKE PAD COMPRISING A RETAINING SPRING DEVICE
PLAQUETTE DE FREIN DOTEE D'UN DISPOSITIF RESSORT DE RETENUE

(30) Priorität: 18.02.1999 DE 19906804; 22.07.1999 DE 19933881
(43) Veröffentlichungstag der Anmeldung: 14.11.2001
(73) Patentinhaber: Continental Teves AG & Co. oHG, 60488 Frankfurt (DE)
(72) Erfinder: RÜCKERT, Helmut, D-64354 Reinheim (DE); KEFERSTEIN, Hans-Georg, D-64291 Darmstadt (DE)
(86) Internationale Anmeldenummer: EP0001373
(87) Internationale Veröffentlichungsnummer: WO00049307

(56) Entgegenhaltungen:
- DE-A- 4 324 988
- DE-A- 19 601 435
- DE-B- 1 223 633

## Beschreibung

Die Erfindung betrifft einen Bremsbelag nach den Oberbegriff des Anspruchs 1 mit Haltefederanordnung zur lösbaren Halterung eines Bremsbelages an einem Kolben einer Teilbelagscheibenbremse sowie zur Verspannung des Bremsbelages gegenüber der Teilbelagscheibenbremse. Ein solche Bremsbelag ist aus DE-A-43 24 988 bekannt.

Aus der DE 197 05 803 A1 ist beispielsweise ein Federelement bekannt, das nicht nur der Festlegung der Trägerplatte des Bremsbelages am Kolben, sondern gleichzeitig einer permanent wirkenden Vorspannung zwischen den beteiligten Bauteilen (Bremssattel, Bremsträger, Bremsbeläge) dient, so daß Klappergeräusche bei nicht betätigter Bremse wirksam unterdrückt werden können. Das bekannte Federelement ist zu diesem Zweck mit einem zentralen teilkreisförmigen Teil in die Nut des Kolbens eingerastet und weist zwei spiegelbildlich ausgeformte Arme auf, die sich vom zentralen Teil bis in die radial außenliegenden, hammerkopfförmige Enden der Trägerplatte erstrecken und endseitig je einen axial nach außen sowie unten abgebogenen Teil aufweisen. Die Formgebung und die Federkraft dieser Federarme sind dabei derart aufeinander abgestimmt, daß die Trägerplatte axial gegen die Stirnfläche des Kolbens sowie radial gegen einen Bremsträger angedrückt wird. Aufgrund der Tatsache, daß die beiden nach unten abgebogenen Teile der Arme ein Angreifen des bekannten Federelements an beiden Enden sowie zumindest zum Teil Übergreifen beider Enden der Trägerplatte realisieren, ist ein an die Konfiguration der jeweiligen Trägerplatte angepaßtes spezielles Federelement gefordert, was sich auch beschränkend auf die Einstellungsmöglichkeiten der Vorspannung auswirkt.

In der DE 12 23 633 A1 ist ein weiteres Federelement beschrieben, das abgewinkelte Enden aufweist, die in Ausnehmungen der Trägerplatte einschnappen, um die federnde Verbindung zwischen Trägerplatte und Bremskolben zu erstellen. Somit besteht hier wiederum der Nachteil der Notwendigkeit der Anpassung des Federelements an die genaue Geometrie der Trägerplatte, was den Einsatzbereich einschränkt, insbesondere nicht auf einfache Weise die Vorspannung des Federelements einstellen läßt.

Eine Belaghaltefeder ist auch aus der DE 196 01 435 A1 bekannt, die mittels eines Basisteils mit dem Reibbelag und mittels zumindest eines federnden Abschnitts mit dem Bremskolben verbunden ist, indem das Basisteil zumindest bereichsweise an der dem Reibbelag abgewandten Seite der Trägerplatte anliegt, sich zwischen der Trägerplatte sowie dem Bremskolben erstreckt und mit dem federnden Abschnitt in eine Nut an der Stirnseite des Bremskolbens eingreift. Die federnden Abschnitte können nur sehr kurz gestaltet werden, so daß deren Federkennung auch nur wenig variiert werden kann. Daraus resultiert eine Toleranzanfälligkeit dieser Anordnung.

Aufgabe der vorliegenden Erfindung ist es daher, einen Bremsbelag mit Haltefederanordnung derart weiterzuentwickeln, daß die Nachteile des Stands der Technik überwunden werden, insbesondere eine kurzbauende Lösung bereitgestellt wird, die eine sichere Anbindung des Bremsbelags an den Kolben gewährleistet sowie eine Anwendung bei verschiedenen Bremsbelagausführung und unterschiedlichen Bauarten von Teilbelagscheibenbremsen erlaubt.

Diese Aufgabe wird erfindungsgemäß durch die Merkmale des Anspruchs 1 gelöst.

In einer ersten Ausführungsform der Erfindung umfaßt die Haltefederanordnung nur ein einziges Federelement, das mit zumindest zwei Federabschnitten unter Federvorspannung in der Nut im Kolben anliegt bzw. in der Nut verrastet ist. Dadurch können je nach Anzahl der in der Nut angeordneten Federabschnitte unterschiedliche Federkräfte auf den Bremsbelag ausgeübt werden. Neben einer axialen Haltekraft, die den Bremsbelag in Anlage am Kolben hält, kann durch das Federelement zusätzlich eine Kraftkomponente in radialer Richtung auf den Bremsbelag aufgebracht werden. Diese Kraftkomponente in radialer Richtung, bezogen auf die Bremsscheibenachse, wird dazu genutzt die Bremsbeläge, einen Bremssattel sowie gegebenenfalls einen Bremsträger gegeneinander zu verspannen, um unerwünschte Klappergeräusche zu unterdrücken. Die Haltefederanordnung erfüllt damit sinnvoll eine Doppelfunktion. Es kann dabei vorgesehen sein, daß das Federelement eine geschlossene Form aufweist. In diesem Fall kann das Federelement vorzugsweise aus einem Drahtring gebogen werden.

Alternativ wird erfindungsgemäß vorgeschlagen, daß das Federelement offen ausgebildet ist und mehrere, insbesondere voneinander getrennte, Federabschnitte aufweist, die in der Kolbennut anliegen und die unterschiedlich gerichteten Kraftkomponenten auf den Bremsbelag ausüben. Insgesamt kann durch die beschriebenen Varianten mit nur einem einzigen Federelement Bauteilaufwand erfreulich gering gehalten werden.

Gemäß einer vorteilhaften Weiterbildung der Erfindung sind mehrere Federelemente, vorzugsweise zwei oder drei, vorgesehen, die jeweils in der Kolbennut unter Federvorspannung anliegen. Durch die Verwendung mehrerer Federelemente können die einzelnen Federelemente einfacher und somit kostengünstiger gestaltet werden. Weiterhin können die unterschiedlichen Funktionen der Haltefederanordnung auf die einzelnen Federelemente aufgeteilt werden. Dies erlaubt die zielgerichtete Auslegung und Gestaltung der Federelemente. Dabei dienen zwei bezogen auf die Kolbenachse vorzugsweise gegenüberliegend angeordnete erste Federelemente der axialen Befestigung des Bremsbelags am Kolben. Ein weiteres zweites Federelement beaufschlagt den Bremsbelag mit einer Federkraft senkrecht zur Anlagefläche zwischen Bremsbelag und Kolben und dient damit der radialen Verspannung von Bremsbelag Bremssattel und gegebenenfalls Bremsträger.

Vorzugsweise ist das Federelement bzw. sind die Federelemente jeweils als Draht- oder Blechfeder ausgebildet. Dies gestattet eine besonders einfache Herstellung.

Ebenfalls wird erfindungsgemäß vorgeschlagen, daß das Halteelement als in den Bremsbelag bzw. die Trägerplatte integriertes Halteglied ausgebildet ist. Dabei kann die auf den Bremsbelag einwirkende Vorspannung des Federelements über die Gestaltung zumindest eines Haltegliedes bzw. einen sonstigen Anlagepunkt des Federelementes am Bremsbelag gezielt beeinflußt werden. Darüber hinaus können solche Halteglieder auch an einer unlösbar mit dem Bremsbelag bzw. der Trägerplatte verbundenen Halteplatte angeformt werden. Als vorteilhafte Ausführung der Halteglieder erweist sich eine Gestaltung in Form von Ösen oder Haken, in denen das Federelement jeweils leicht befestigt werden kann.

Gemäß einer Weiterbildung der Erfindung wird die Haltefederanordnung mit einer üblichen Dämpfungsmaßnahme am Bremsbelag zur Geräuschunterdrückung kombiniert. Dazu ist die mit dem Bremsbelag unlösbar verbundene Halteplatte, an der zumindest ein Federelement befestigt ist, als Dämpfungsblech bzw. sonstige Dämpfungslage ausgebildet.

Ebenfalls können die Halteelemente für das Federelement als Sicherungsscheiben ausgeführt sein. Diese axialen Sicherungsscheiben sind dann vorzugsweise an einem Vorsprung des Bremsbelages befestigt und übergreifen das Federelement zur Halterung. Bevorzugt können solche Vorsprünge jeweils als Durchstellung oder sonstige Erhebung an der Trägerplatte bzw. an der Halteplatte angeformt sein.

Spezielle Ausführungsformen der Erfindung sind dadurch gekennzeichnet, daß die Halteelemente jeweils zumindest zum Teil in den Bremsbelag bzw. die Trägerplatte eingeführt sind, vorzugsweise als eingebrachter Haltestift oder Niet sind, wobei der Haltestift bzw. der Niet das Federelement axial übergreift und somit am Bremsbelag befestigt.

Die beschriebene Haltefederanordnung ist aufgrund ihrer Funktionalität besonders zweckmäßig und erfordert zudem nur einen geringen axialen Bauraum. Dadurch kann die erfindungsgemäße Haltefederanordnung sowohl bei unterschiedlichen Bremsbelagausführungen als auch bei verschiedenen Bauarten von Teilbelagscheibenbremsen, z. B. Faustsattelbremsen, Festsattelbremsen, elektromechanischen Bremsen, kombinierten Betriebs/Feststellbremsen etc., universelle Verwendung finden.

Weitere Merkmale und Vorteile der Erfindung ergeben sich aus den Unteransprüchen sowie der nachfolgenden Beschreibung, in der Ausführungsbeispiele der Erfindung anhand von schematischen Zeichnungen im einzelnen erläutert sind. Dabei zeigt:
- Figur 1: eine teilweise geschnittene Seitenansicht eines Bremsbelages mit Haltefederanordnung im Einbauzustand innerhalb einer Teilbelagscheibenbremse;
- Figur 2a-c: drei Ansichten eines Bremsbelages mit Haltefederanordnung in einer analogen Ausführung zu Fig. 1;
- Figur 3a-b: zwei Ansichten eines Bremsbelages mit Haltefederanordnung in einer zweiten Ausführung mit einem einteiligen Federelement;
- Figur 4-5: zwei geschnittene Teilansichten weiterer Varianten zur alternativen erfindungsgemäßen Fixierung. des Federelements am Bremsbelag.

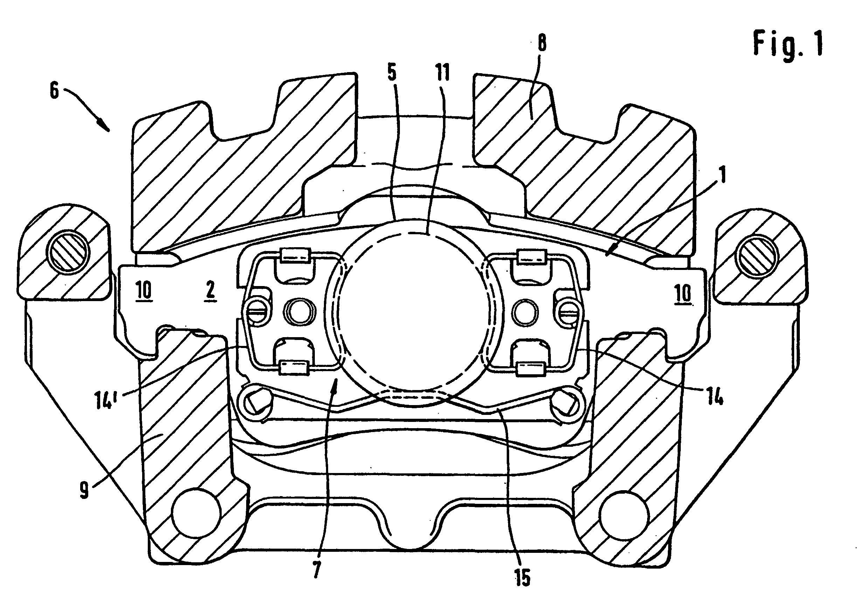

Der in Figur 1 gezeigte Bremsbelag 1 mit Haltefederanordnung 7 ist in seiner Einbaulage innerhalb einer als Faustsattelbremse 6 ausgeführten Teilbelagscheibenbremse dargestellt. Die Faustsattelbremse 6 umfaßt im wesentlichen einen eine nicht gezeigte Bremsscheiben sowie beiderseits der Bremsscheibe angeordnete Bremsbeläge 1 übergreifenden Bremssattel 8 sowie einen fahrzeugfest montierten Bremsträger 9. Dabei ist der Bremssattel 8 bezogen auf eine nicht gezeigte Bremsscheibenachse axial verschiebbar am Bremsträger 9 gelagert. Die beiderseits der Bremsscheibe angeordneten Bremsbeläge 1 sind zur Übertragung von Bremsumfangkräften über seitliche Ansätze 10 in Axialrichtung verschiebbar im Bremsträger 9 aufgenommen. Zur Betätigung der Faustsattelbremse 6, d. h. zum Andrücken der Bremsbeläge 1 an die Bremsscheibe ist eine Betätigungseinheit mit einem Kolben 5 vorgesehen, wobei die Betätigungseinheit vorzugsweise hydraulisch, mechanisch oder elektromechanisch betätigbar ist. Für die gezeigte Faustsattelbremse 6 wird ein erster Bremsbelag 1 durch Verschiebung des Kolbens 5 direkt und ein zweiter Bremsbelag durch gegenläufige Axialverschiebung des Bremssattels 8 indirekt in Anlage mit der Bremsscheibe gebracht. Die an den Bremsbelägen 1 auftretenden Bremsumfangskräfte werden über die seitlichen Ansätze 10 unmittelbar in den fahrzeugfesten Bremsträger 9 eingeleitet.

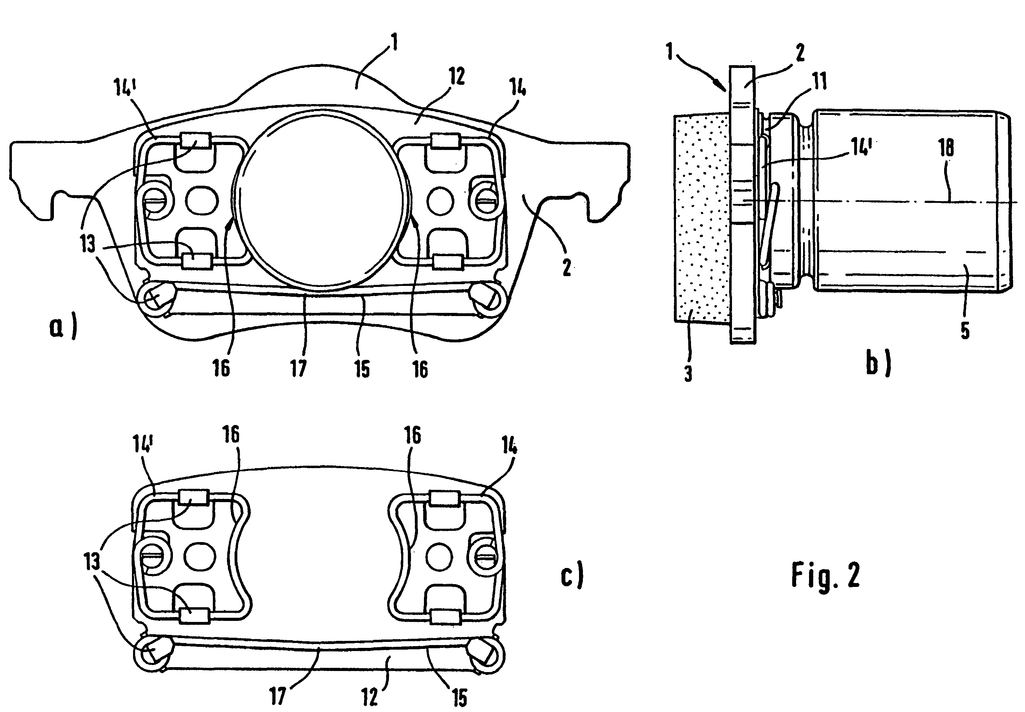

Der erste, kolbenseitige Bremsbelag 1 ist mittels einer Haltefederanordnung 7 an die Bewegung des Kolbens 5 gekoppelt. Diese Haltefederanordnung 7 umfaßt im wesentlichen zwei erste 14, 14' sowie ein zweites Federelement 15. Die Federelemente 14, 14', 15 sind in einer Nut 11 des Kolbens 5 verrastet und andererseits am Bremsbelag 1 befestigt. Den Figuren 2a-c sind weitere Details der Haltefederanordnung zu entnehmen.

Die Figuren 2a-c zeigen einen kolbenseitigen Bremsbelag 1, der eine Trägerplatte 2 sowie einen darauf aufgebrachten Reibbelag 3 umfaßt. Dabei ist der Reibbelag 3 zur Anlage an der nicht gezeigten Bremsscheibe vorgesehen. Auf der dem Reibbelag 3 abgewandten Seite der Trägerplatte 2 ist eine Halteplatte 12 vorzugsweise unlösbar befestigt, beispielsweise durch Kleben. An der Halteplatte 12 wiederum sind mittels mehrerer Halteglieder 13 die Federelemente 14, 14', 15 fixiert. Die einzelnen Halteglieder 13 sind insbesondere als Haken oder Ösen ausgebildet, die die Federelemente 14, 14', 15 jeweils umgreifen. Die Federelemente 14, 14', 15 sind mit ersten 16 bzw. zweiten 17 Federabschnitten unter Federvorspannung in einer Nut 11 am Kolben 5 angeordnet und halten damit den Bremsbelag 1 axial am Kolben 5.

Die Federelemente 14, 14', 15 sind besonders vorteilhaft aus einfachen Federdrahtabschnitten gebogen und können sowohl offen als auch in Form eines geschlossenen Drahtringes gestaltet sein. Darüber hinaus sind grundsätzlich auch Ausführungen der Federelemente 14, 14', 15 aus Federblech möglich.

Die beiden ersten Federelemente 14, 14' sind bezogen auf die Kolbenachse 18 gegenüberliegend angeordnet. Sie sind mit ersten Federabschnitten 16 jeweils in der Kolbennut 11 verrastet und üben eine axiale Federkraft auf den Bremsbelag 1 aus. Dadurch wird der Bremsbelag 1 an den Kolben 5 angedrückt und an die Kolbenbewegung während der Bremsenbetätigung gekoppelt.

Das zweite Federelement 15 wirkt mittels eines zweiten Federabschnittes 17 über eine senkrecht zur Kolbenachse 18 gerichtete Kraftkomponente auf den Bremsbelag 1 ein. Dadurch wird der Bremsbelag 1 radial über den Kolben 5 mit Bremssattel 8 und damit auch mit dem Bremsträger 9 verspannt. Dies sorgt für eine klapperfreie Anlage des Bremsbelages 1 am Bremsträger 9.

Die Verwendung mehrerer Federelemente 14, 14', 15 erlaubt eine Funktionstrennung innerhalb der Haltefederanordnung in 'axiale Belaghalterung am Kolben' sowie 'klapperfreie Radialverspannung von Bremsbelag, Bremssattel und Bremsträger'. Weiterhin wird dadurch die zielgerichtete Auslegung und Gestaltung der einzelnen Federelemente gestattet.

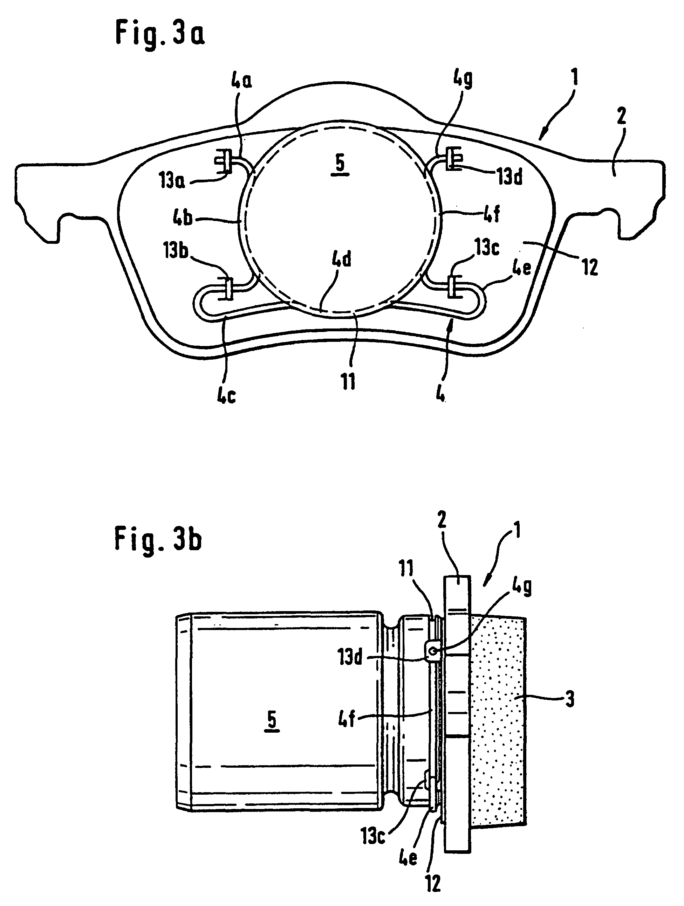

In den Figuren 3a und 3b sind zwei Ansichten eines kolbenseitigen Bremsbelages 1 mit einer alternativen Haltefederanordnung 7 zur lösbaren Befestigung am Kolben gezeigt. Dabei ist das einteilige, aus Federdraht gefertigte Federelement 4 spiegelbildlich ausgebildet und umfaßt drei Federabschnitte 4b, 4d, 4f, die jeweils in einer auf der Kolbenaußenseite verlaufenden Nut 11 unter Federvorspannung eingerastet sind. Dabei sorgen die beiden ersten Federabschnitte 4b und 4f wie oben beschrieben für die axiale Befestigung des Bremsbelages 1 am Kolben. Der zweite Federabschnitt 4d wirkt radial, d. h. in den Figuren 3a und 3b vertikal, auf den Bremsbelag ein. Zwischen diesen drei Federabschnitten 4b, 4d, 4f sind zwei im wesentlichen U-förmige Abschnitte 4c, 4e ausgebildet und über Halteglieder 13b, 13c gegen die Trägerplatte 2 des Bremsbelages 1 gedrückt. Schließlich umfaßt das Federelement 4 noch zwei freie Endabschnitte 4a, 4g, die sich senkrecht zur Kolbenachse von den spiegelbildlichen ersten Federabschnitten 4b, 4f wegerstrecken und jeweils mittels eines ösenartigen Haltegliedes 13a, 13d gegen den Bremsbelag 1 gedrückt werden. Dabei ist auf der dem Reibbelag 3 abgewandten Seite der Trägerplatte 2 eine Halteplatte 12 befestigt, an der die Halteglieder 13a-d angeformt sind. Damit wird das Federelement 4 über die Halteplatte 12 am Bremsbelag 1 gehalten. Vorzugsweise ist die Halteplatte 12 als lackiertes, gummiertes oder sonstig beschichtetes Dämpfungsblech ausgeführt. Dadurch wird sowohl die Halterung des Federelementes 4 wie auch die Dämpfungsfunktion von einem einzigen Bauteil übernommen. Diese Dämpfungsfunktion ist jedoch für die Erfindung nicht notwendigerweise erforderlich, so daß die Halteplatte 12 beispielsweise auch als übliches Blechbauteil ausgeführt sein kann.

Bei der Axialverbindung zwischen dem Bremsbelag 1 und dem Kolben 5 handelt es sich um eine Rastverbindung, nämlich über die Kolbennut 11, bzw. eine Klemmverbindung, nämlich über die Halteglieder 13a bis 13d. Die radiale Federung ist im wesentlichen über die Form und die Einklemmung der U-förmigen Federabschnitte 4c, 4e sowie der Endabschnitte 4a, 4g eingestellt.

Allgemein können die Halteglieder in unterschiedlichster Form ausgeführt sein, beispielsweise in Form eines Hakens, siehe 13b, 13c, oder einer Öse, siehe 13a, 13d, gemäß Figuren 3a und 3b. Darüber hinaus ist es denkbar die jeweiligen Halteglieder 13, 13a-d entweder an eine Halteplatte 12 anzuformen oder aber direkt in den Bremsbelag 1 bzw. die Trägerplatte 2 zu integrieren.

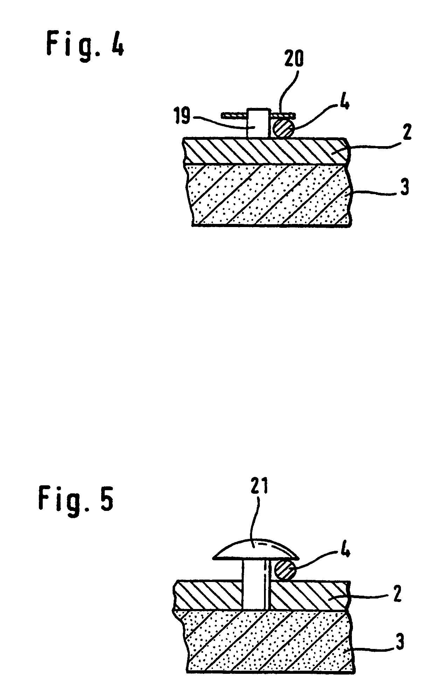

Ferner können die Halteelemente auch als separate Bauteile entsprechend den Figuren 4, 5 ausgebildet sein, die entsprechend mit dem Bremsbelag 1 bzw. der Trägerplatte unlösbar verbunden sind. Nach Figur 3 besitzt die Trägerplatte 2 an ihrer dem Reibbelag 3 abgewandten Seite einen Vorsprung 19 in Form einer Blechdurchstellung , an dem eine separate Sicherungsscheibe 20 angreift. Ein solcher Vorsprung 19 kann gleichfalls an einer mit dem Bremsbelag 1 verbundenen Halteplatte 12 vorgesehen werden. Die Sicherungsscheibe 20 ist am Vorsprung 19 verkrallt und übergreift gleichzeitig einen Abschnitt des Federelementes 4, das dadurch am Bremsbelag 1 gehalten wird.

Gemäß der Ausführung nach Figur 5 ist ein Haltestift oder Niet 21 in der Trägerplatte 2 befestigt und übergreift gleichzeitig das Federelement 4 zur Halterung am Bremsbelag. Die Befestigung des Federelementes 4 mittels einer Sicherungsscheibe 20 oder eines Haltestiftes bzw. Niets 21 kann insbesondere auch ohne eine zusätzliche Halteplatte angewendet werden. Auch kann es vorteilhaft sein, die Halteglieder variabel zu gestalten, um eine Veränderung der Federvorspannung zu ermöglichen. Eine Veränderung der Federvorspannung kann weiterhin durch entsprechende Gestaltung der Anlageflächen des Federelementes 4 an der Halteplatte 12 bzw. direkt an der Trägerplatte 2 erreicht werden. Beispielsweise können an der Hälteplatte 12 oder an der Trägerplatte 2 Durchstellungen oder sonstige Erhebungen bzw. Absenkungen vorgesehen sein, an denen das Federlement 4 anliegt. Durch geeignete Gestaltung der Anlageflächen des Federelementes 4 an der Halteplatte 12 bzw. der Trägerplatte 2 läßt sich somit für das Federelement 4 nahezu in allen Richtungen die gewünschte Vorspannung erreichen.

Allgemein erlaubt die Haltefederanordnung 7 durch Verwendung von Federelementen 4, 14, 14', 15 und Halteelementen 12, 13, 20, 21 besonders vielseitige Gestaltungsmöglichkeit. Dies gestattet den universellen Einsatz der Haltefederanordnung bei unterschiedlichen Bremsbelagbauformen sowie verschiedenen Typen von Teilbelagscheibenbremsen.

## Patentansprüche

1. Bremsbelag (1) mit einer Haltefederanordnung (7) zur losbaren Befestigung des Bremsbelags (1) an einem Kolben (5) einer Teilbelagscheibenbremse (6), die zumindest ein Federelement (4, 14, 14', 15) umfaßt, das mit zumindest einem Abschnitt (4b, 4d, 4f, 16, 17) unter Federvorspannung in einer Nut (11) im Kolben (5) anlegbar ist und mittels zumindest eines mit dem Bremsbelag (1) verbundenen Halteelementes (12, 13, 13a-d) an der dem Kolben (5) zugewandten Seite des Bremsbelages (1) befestigt ist, **dadurch gekennzeichnet, daß** das Halteelement als am Bremsbelag (1) unlösbar befestigte Halteplatte (12) mit zumindest einem integrierten Halteglied (13, 13a-d) ausgebildet ist.

2. Bremsbelag mit Haltefederanordnung nach Anspruch 1, **dadurch gekennzeichnet, daß** der Bremsbelag (1) eine Trägerplatte (2) sowie einen darauf aufgebrachten Reibbelag (3) aufweist, wobei das Halteelement (12, 13, 13a-d) mit der Trägerplatte (2) unlösbar verbunden ist.

3. Bremsbelag mit Haltefederanordnung nach einem der Ansprüche 1-2, **dadurch gekennzeichnet, daß** ein Federelement (4) vorgesehen ist, das mit zumindest zwei Abschnitten (4b, 4d, 4f) unter Federvorspannung in der Nut (11) im Kolben (5) anliegbar ist.

4. Bremsbelag mit Haltefederanordnung nach Anspruch 3, **dadurch gekennzeichnet, daß** das Federelement (4) zumindest einen ersten Federabschnitt (4b, 4f) aufweist, der den Bremsbelag (1) an den Kolben (5) andrückt.

5. Bremsbelag mit Haltefederanordnung nach Anspruch 4, **dadurch gekennzeichnet, daß** das Federelement (4) zwei erste Federabschnitte (4b, 4f) aufweist, die bezogen auf die Kolbenachse (18) gegenüberliegend angeordnet sind.

6. Bremsbelag mit Haltefederanordnung nach einem der Ansprüche 3-5, **dadurch gekennzeichnet, daß** das Federelement (4) zumindest einen zweiten Federabschnitt (4d) aufweist, der den Bremsbelag (1) senkrecht zur Kolbenachse (18) mit einer Federkraft beaufschlagt.

7. Bremsbelag mit Haltefederanordnung nach einem der Ansprüche 1-2, **dadurch gekennzeichnet, daß** mehrere Federelemente (14, 14', 15) vorgesehen sind, die jeweils mit genau einem Abschnitt (16, 17) unter Federvorspannung in der Nut (11) im Kolben (5) anlegbar sind.

8. Bremsbelag mit Haltefederanordnung nach Anspruch 7, **dadurch gekennzeichnet, daß** zwei erste Federelemente (14, 14') mit jeweils einem ersten Federabschnitt (16) vorgesehen sind, die den Bremsbelag (1) an den Kolben (5) andrücken.

9. Bremsbelag mit Haltefederanordnung nach Anspruch 8, **dadurch gekennzeichnet, daß** die zwei ersten Federelemente (14, 14') bezogen auf die Kolbenachse (18) gegenüberliegend angeordnet sind.

10. Bremsbelag mit Haltefederanordnung nach einem der Ansprüche 7-9, **dadurch gekennzeichnet, daß** zumindest ein zweites Federelement (15) mit einem zweiten Federabschnitt (17) vorgesehen ist, der den Bremsbelag (1) senkrecht zu einer Kolbenachse (18) mit einer Federkraft beaufschlagt.

11. Bremsbelag mit Haltefederanordnung nach einem der vorhergehenden Ansprüche, **dadurch gekennzeichnet, daß** das Federelement (4, 14, 14', 15) jeweils als eine Blechfeder oder eine Drahtfeder ausgebildet ist.

12. Bremsbelag mit Haltefederanordnung nach Anspruch 1, **dadurch gekennzeichnet, daß** das Halteglied (13, 13a-d) als Haken oder Öse ausgeführt ist.

13. Bremsbelag mit Haltefederanordnung nach Anspruch 12, **dadurch gekennzeichnet, daß** die Halteplatte (12) als Dämpfungsblech ausgebildet ist.

## Claims

1. Brake pad (1) comprising a retaining spring device (7) for the detachable attachment of the brake pad (1) on a piston (5) of a spot-type disc brake (6) that comprises at least one spring element (4, 14, 14', 15) being, with at least one portion (4b, 4d, 4f, 16, 17), under spring bias movable into abutment in a groove (11) in piston (5) and being attached to the side of the brake pad (1) close to said piston (5) by means of at least one retaining element (12, 13, 13a-d) that is connected to the brake pad (1),
**characterized in that** the retaining element is configured as a retaining plate (12) which is non-detachably fastened to the brake pad (1) and has at least one integrated retaining member (13, 13a-d).

2. Brake pad comprising a retaining spring device as claimed in claim 1,
**characterized in that** the brake pad (1) includes a carrier plate (2) and a friction lining (3) applied thereto, with said retaining element (12, 13, 13a-d) being non-detachably connected to the carrier plate (2).

3. Brake pad comprising a retaining spring device as claimed in any one of claims 1 to 2,
**characterized in that** there is provision of a spring element (4) which, with at least two portions (4b, 4d, 4f), under spring bias is movable into abutment in the groove (11) in piston (5).

4. Brake pad comprising a retaining spring device as claimed in claim 3,
**characterized in that** the spring element (4) includes at least one first spring portion (4b, 4f) which urges the brake pad (1) against the piston (5).

5. Brake pad comprising a retaining spring device as claimed in claim 4,
**characterized in that** the spring element (4) includes two first spring portions (4b, 4f) which are arranged opposite each other with respect to the piston axis (18).

6. Brake pad comprising a retaining spring device as claimed in any one of claims 3 to 5,
**characterized in that** the spring element (4) includes at least one second spring portion (4d) which applies a spring force to the brake pad (1) vertically to the piston axis (18).

7. Brake pad comprising a retaining spring device as claimed in any one of claims 1 to 2,
**characterized in that** there is provision of several spring elements (14, 14', 15) which, under spring bias, are respectively movable to abut with exactly one portion (16, 17) in the groove (11) in piston (5).

8. Brake pad comprising a retaining spring device as claimed in claim 7,
**characterized in that** there is provision of two first spring elements (14, 14') with respectively one first spring portion (16) that urge the brake pad (1) against the piston (5).

9. Brake pad comprising a retaining spring device as claimed in claim 8,
**characterized in that** the two first spring elements (14, 14') are arranged opposite each other with respect to the piston axis (18).

10. Brake pad comprising a retaining spring device as claimed in any one of claims 7 to 9,
**characterized in that** there is provision of at least one second spring element (15) with a second spring portion (17) which applies a spring force to the brake pad (1) vertically to a piston axis (18).

11. Brake pad comprising a retaining spring device as claimed in any one of the preceding claims,
**characterized in that** each spring element (4, 14, 14', 15) is configured as a sheet-metal spring or a wire spring.

12. Brake pad comprising a retaining spring device as claimed in claim 1,
**characterized in that** the retaining member (13, 13a-d) is configured as a hook or eyelet.

13. Brake pad comprising a retaining spring device as claimed in claim 12,
**characterized in that** the retaining plate (12) is configured as a damping plate.

## Revendications

1. Garniture de frein (1) munie d'un dispositif élastique de maintien (7) pour assurer la fixation désolidarisable de la garniture de frein (1) sur un piston (5) d'un frein à disque à garniture partielle (6), comprenant au moins un élément formant ressort (4, 14, 14', 15), pouvant être placé par, au moins un tronçon (4b, 4d, 4f, 16, 17), sous une contrainte élastique, dans une gorge (11) ménagée dans le piston (5) et fixé sur la face de garniture de frein (1), tournée vers le piston (5), à l'aide d'au moins un élément de maintien (12, 13, 13a-d) relié à la garniture de frein (1), **caractérisée en ce que** l'élément de maintien est réalisé sous la forme de plaque de maintien (12), fixée de façon indésolidarisable sur la garniture de frein (1) et munie d'au moins un organe de maintien (13, 13a-d) intégré.

2. Garniture de frein dotée d'un dispositif élastique de maintien selon la revendication 1, **caractérisée en ce que** la garniture de frein (1) présente une plaque support (2), ainsi qu'une garniture de friction (3) appliquée sur celle-ci, l'élément de maintien (12, 13, 13a-d) étant relié de façon indésolidarisable à la plaque support (2).

3. Garniture de frein dotée d'un dispositif élastique de maintien selon l'une des revendications 1 à 2, **caractérisée en ce qu'**un élément formant ressort (4) est prévu, pouvant être appliqué sous précontrainte élastique dans la gorge (11) ménagée dans la piston (5) par au moins deux tronçons (4b, 4d, 4f).

4. Garniture de frein dotée d'un dispositif élastique de maintien selon la revendication 3, **caractérisée en ce que** l'élément formant ressort (4) présente au moins un premier tronçon de ressort (4b, 4f), pressant la garniture de frein (1) sur le piston (5).

5. Garniture de frein dotée d'un dispositif élastique de maintien selon la revendication 4, **caractérisée en ce que** l'élément formant ressort (4) présente deux premiers tronçons de ressort (4b, 4f), placés l'un à l'opposé de l'autre par rapport à l'axe de piston (18).

6. Garniture de frein dotée d'un dispositif élastique de maintien selon l'une des revendications 3 à 5, **caractérisée en ce que** l'élément formant ressort (4) présente au moins un deuxième tronçon de ressort (4d), sollicitant la garniture de frein (1) par une force élastique, perpendiculairement par rapport à l'axe des pistons (18).

7. Garniture de frein dotée d'un dispositif élastique de maintien selon l'une des revendications 1 à 2, **caractérisée en ce que** plusieurs éléments formant ressort (14, 14', 15) sont prévus, pouvant être placés chacun, par précisément un tronçon (16, 17), avec une précontrainte élastique, dans la gorge (11) ménagée dans le piston (5).

8. Garniture de frein dotée d'un dispositif élastique de maintien selon la revendication 7, **caractérisée en ce que** deux premiers éléments de ressort (14, 14') sont prévus, chacun avec un premier tronçon de ressort (16), qui pressent la garniture de frein (1) sur le piston (5).

9. Garniture de frein dotée d'un dispositif élastique de maintien selon la revendication 8, **caractérisée en ce que** les deux premiers éléments de ressort (14, 14') sont disposés à l'opposé l'un de l'autre par rapport à l'axe de piston (18).

10. Garniture de frein dotée d'un dispositif élastique de maintien selon l'une des revendications 7 à 9, **caractérisée en ce qu'**au moins un deuxième élément de ressort (15), ayant un deuxième tronçon de ressort (17), est prévu, qui sollicite la garniture de frein (1) par une force élastique, perpendiculairement à un axe de piston (18).

11. Garniture de frein dotée d'un dispositif élastique de maintien selon l'une des revendication précédentes, **caractérisée en ce que** l'élément formant ressort (4, 14, 14', 15) est respectivement réalisé sous forme de ressort en tôle ou bien de ressort en fil de fer.

12. Garniture de frein dotée d'un dispositif élastique de maintien selon la revendication 1, **caractérisée en ce que** l'élément de maintien (13, 13a-d) est réalisé sous la forme de crochet ou d'oeillet.

13. Garniture de frein dotée d'un dispositif élastique de maintien selon la revendication 12, **caractérisée en ce que** la plaque de maintien (12) est réalisée sous la forme de tôle d'amortissement.
